**Europäisches Patentamt**

**European Patent Office**

**Office européen des brevets**

(19)

(11) Numéro de publication: **0 020 487**
**B1**

(12) **FASCICULE DE BREVET EUROPEEN**

(45) Date de publication du fascicule du brevet: **23.06.82**

(51) Int. Cl.³: **G 21 C 13/00,** F 22 B 1/00

(21) Numéro de dépôt: **79901325.5**

(22) Date de dépôt: **18.10.79**

(86) Numéro de dépôt international:
**PCT/FR79/00095**

(87) Numéro de publication internationale:
**WO 80/00893 01.05.80 Gazette 80/10**

(54) **Chaufferie nucléaire et procédé de sa réalisation.**

(30) Priorité: **20.10.78 FR 7829963**

(43) Date de publication de la demande:
**07.01.81 Bulletin 81/1**

(45) Mention de la délivrance du brevet:
**23.06.82 Bulletin 82/25**

(84) Etats contractants désignés:
**AT CH DE FR GB LU NL SE**

(56) Documents cités:
**US - A - 3 127 321**
**US - A - 3 164 525**

(73) Titulaire: **ATELIERS ET CHANTIERS DE BRETAGNE
ACB Société anonyme dite:
Prairie-au-Duc
F-44200 Nantes (FR)**

(72) Inventeur: **PIERART, Robert
46, boulevard des Américains
44000 Nantes (FR)**

(74) Mandataire: **Weinmiller, Jürgen et al,
Zeppelinstrasse 63
D-8000 München 80 (DE)**

Courier Press, Leamington Spa, England.

## Chafferie nucléaire et procédé de sa réalisation

La présente invention concerne une chafferie nucléaire fixe comprenant

— un réacteur nulcéaire,
— au moins un générateur de vapeur connecté à ce réacteur,
— un enceinte de confinement contenant ce réacteur et ce générateur et munie d'une support de manière à constituer un block réacteur,
— et des appareillages et locaux auxiliaires.

En outre, l'invention concerne un procédé de réalisation d'une telle chafferie.

Jusqu'à présent, on construisait sur place, c'est-à-dire sur le site d'implantation choisi, les divers éléments constituant une chafferie nulcéaire. Toutefois, cette manière de procéder présente de très nombreaux inconvénients. En effet, lorsqu'il s'agit de réaliser une installation sur un site éloigné ou dans un pays sous-développé, on se heurte à des problèmes de terrain, de main-d'oeuvre, etc... qui rendent peu facile sinon impossible une telle construction.

Selon l'un des buts principaux de la présente invention, on supprime les inconvénients précités en proposant une installation nucléaire complète préfabriquée et transportable sur le site d'utilisation. A ce propos, on connait, par le document US—A 3 127 321 une chafferie pour la traction d'un véhicule sur rail. Par sa conception légère, à puissance réduite, une telle chafferie doit être appelée "mobile" plutôt que transportable. Lorsque le poids et la puissance augmentent, des problèmes se posent au sujet du degré de préfabrication en usine et du transport vers le site.

Les conditions d'accès au site d'implantation de la chafferie sont souvent difficiles, et, par ailleurs, le poids total et l'encombrement considérables d'une telle chafferie rendent difficiles sa préfabrication ainsi que sa manutention et son transfert sous une forme monobloc.

L'invention a donc encore pour but de remediére aux inconvénients ci-dessus en proposant notamment une installation nucléaire constituée par des éléments modulaires préfabriques, séparés et mutuellement emboîtables.

A cet effet, l'invention a pour objet une chafferie nulcéaire fixe comprenant

— un réacteur nucléaire,
— au moins un générateur de vapeur connecté à ce réacteur,
— une enceinte de confinement contenant ce réacteur et ce générateur et munie d'un support de manière à constituer un block réacteur,
— et des appareillages et locaux auxiliaires, caractérisée par le fait que ledit block réacteur est construit de manière à constituer un module transportable indépendamment,
— la chafferie comportant en outre une structure constituant un caisson transportable, qui délimite un volume interne et comporte une ouverture sur l'une de ses parois latérales pour permettre d'introduire ledit block réacteur dans le volume interne,
— et un élément de fermeture transportable pour obturer ladite overture,
— une partie au moins desdits appreillages et locaux auxiliaires étant intégrée dans les parois de ce caisson,
— les trois éléments constitués par ce block réacteur, ce caisson et cet élément de
— les trois éléments constitués par ce block réacteur, ce caisson et cet élément de fermeture étant transportables aussi bien ensemble que séparément de manière à permettre d'installer d'abord le caisson puis d'introduire le bloc réacteur par déplacement horizontal, puis d'obturer l'ouverture de ce caisson par déplacement horizontal de l'élément de fermeture.

Avantageusement, ledit élément contient un piscine pour le stockage des éléments combustibles usés.

L'invention a également pour objet un procédé de réalisation d'une telle chafferie, qui est caractérisé par le fait qu'il comporte les étapes suivantes:

— préfabrication et essai en usine d'un block réacteur transportable comportant une enceinte de confinement contenant un réacteur nucléaire et au moins un générateur de vapeur connecté à ce réacteur, ce block réacteur étant monté sur un support assurant sa stabilité aussi bien en service que pendant le transport,
— préfabrication et essai en usine d'un caisson métallique transportable dont les parois intègrent des appareillages et locaux auxiliaires et délimitent un volume interne avec une ouverture sur l'une des parois latérales,
— préfabrication et essai en usine d'une élément de fermeture transportable pour obturer ladite ouverture du caisson,
— chargement par déplacement horizontal, de ce block réacteur, de ce caisson et de cet élément de fermeture sur au moins une barge de transport par eau,
— acheminement de cette barge par voie d'eau jusqu'à l'emplacement définitif de la chafferie,
— déchargement et mise en place de ce caisson par déplacement horizontal,
— déchargement et introduction du block réacteur dans le caisson par déplacement horizontal à travers ladite ouverture,

— et déchargement et mise en place de l'élément de fermeture par déplacement horizontal jusqu'à obturer cette ouverture.

D'autres caractéristiques et avantages de l'invention apparaîtront mieux dans la description détaillée qui suit et se réfère aux dessins annexés, donnés uniquement à titre d'exemple, et dans lesquels:

— la figure 1 est une vue de trois modules pouvant constituer une chaufferie nucléaire conforme à l'invention, et à savoir un caisson montré en coupe longitudinale, un bloc réacteur et une piscine de stockage montrés en élévation;

— la figure 2 montre les trois modules ci-dessus en cours de chargement avant leur transport;

— la figure 3 est une vue en coupe faite suivant la ligne III—III de la figure 2;

— la figure 4 est une vue en élévation et coupe longitudinale partielle de la chaufferie complète; et

— la figure 5 est une vue en coupe faite suivant la ligne V—V de la figure 4.

Suivant un exemple de réalisation, et en se reportant aux dessins annexés, une chaufferie nucléaire conforme aux principes de l'invention comprend essentiellement trois modules élémentaires fabriqués et contrôlés en atelier, et à savoir: un caisson ou îlot nucléaire 1, un block réacteur 2, et un block 3 formant piscine de stockage pour le combustible nucléaire usé.

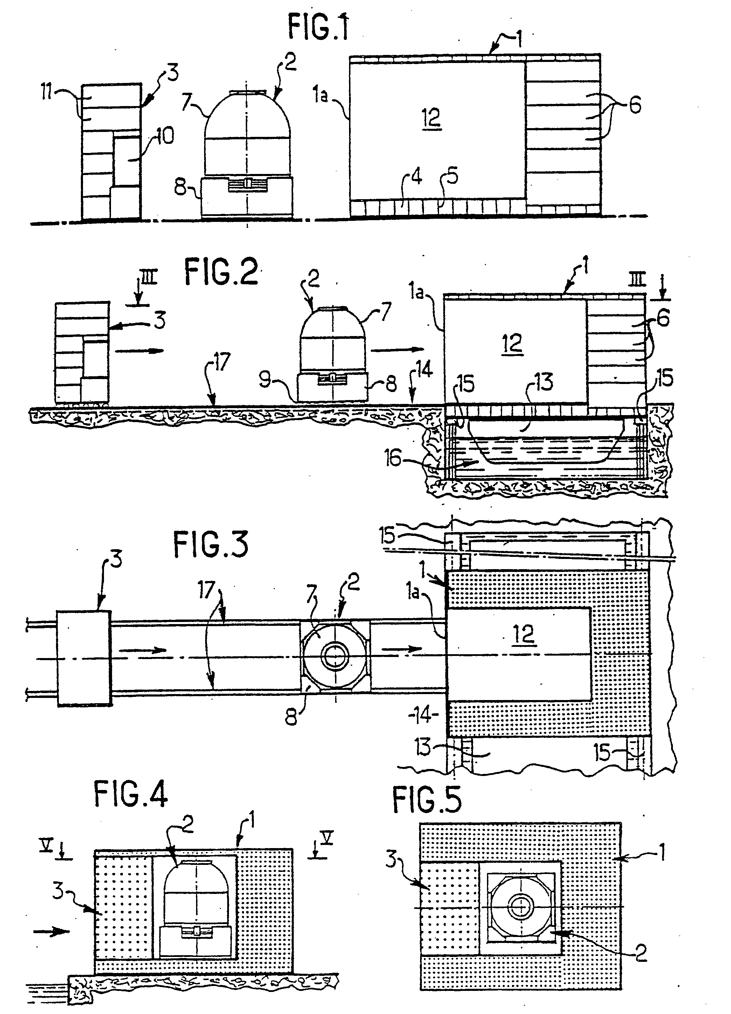

Le block réacteur 2, objet essentiel de la présente invention est constitué par une enveloppe 7 renfermant notamment une cuve et des générateurs de vapeur qui n'ont pas été représentés, car ils ne font pas partie de la présente invention. L'enveloppe 7 et son contenu sont supportés par un socle 8 auquel sont associés des moyens de déplacement représentés schématiquement en 9 sur la figure 2 et permettant au block réacteur 2 d'être déplacé par roulement ou glissement.

Il convient d'ajouter ici que le socle 8 est convenablement aménagé et comporte des alvéoles ou locaux séparés permettant entre autres l'installation de circuits nucléaires de sécurité. En outre, il est important de noter que ce socle sert avantageusement à assurer la stabilité du réacteur 2 en service. Plus précisément, le socle 8 permet une répartition uniforme du poids du réacteur sur le fond du caisson 1 qui sera maintenant décrit.

Le caisson 1 se présente sous la forme d'un module rectangulaire ouvert en 1a. Il comporte un double fond 4 renforcé par des cloisons ou analogues 5, ainsi que des espaces 6 formant locaux dans lesquels sont installés notamment des circuits auxiliaires servant à l'exploitation de la chaufferie.

Le caisson 1 est obturable par un élément de fermeture qui, suivant l'exemple de réalisation représenté, est un block 3 formant piscine de stockage pour le combustible usé. On a montré en 10 une partie du module 3 formant piscine et en 11 un certain nombre d'alvéoles on locaux 11 contenant notamment des circuits divers de commande et de raccordement.

Le montage en usine ou sur site des modules 1, 2 et 3 préfabriques, s'effectue de la façon suivante.

On insère le block réacteur 2 dans la cavité 12 ménagée à l'intérieur du caisson 1 et constituant le compartiment nucléaire principal de la chaudière. Ensuite, le module 3 formant par exemple piscine de stockage est emboîté entre les parois de fond et de dessus du caisson 1 de façon à réaliser l'obturation dudit caisson pour finalement aboutir à la chaufferie complète-ment assemblée· telle qu'on la voit sur les figures 4 et 5. Les raccordements mécaniques et électriques nécessaires entre les différents modules seront évidemment effectués, cette opération étant facilitée par la prévision de locaux séparés tant dans le module 1 et le module 3, que dans le socle 8 portant le réacteur 2, comme on l'a décrit précédemment.

Comme on l'a dit au début de cette description, une intallation conforme aux principes de l'invention peut constituer une chaufferie nucléaire complète formant un module transportable sur le site d'utilisation. On décrira donc maintenant, à titre d'exmple, une manière de procéder pour réaliser la manutention et le transport de la chaufferie, en se reportant aux figures 2 et 3.

Le caisson ou îlot nucléaire 1 est amené sur des supports ou longrines 15 prévus sur les côtés d'un bassin 16 qui est par exemple une forme de construction navale à niveau réglable et qui est adjacent à un quai de chargement 14. On introduira successivement dans la cavité 12 du caisson 1 le block réacteur 2 et l'élément de fermeture 3 du caisson 1. La mise en place de ces deux éléments dans le caisson 1 s'effectuera par exemple par roulement sur une voie ferrée repérée schématiquement en 17.

Ensuite, en abaissant le niveau de l'eau dans le bassin 16, on introduira une barge 13 dans ledit bassin sous le caisson 1. Cette opération peut être effectuée également par ballastage de la barge 13. Ensuite, par déballastage de la barge ou élévation du niveau de l'eau dans le bassin 16, on réalisera le soulèvement de la barge en dessous du caisson 1. Dès lors, la chaufferie nulcéaire est prête au transport vers le site choisi.

Il est important de noter ici que la manutention des modules "gigogne" 1, 2 et 3 qui vient d'être décrite ne nécessite pas l'utilisation de grues, les déplacements effectués par lesdits modules pour réaliser leur emboîtement étant essentiellement des translations dans un plan sensiblement horizontal.

Enfin, comme on l'a précisé au début de la description, le transport des modules 1, 2 et 3 peut être avantageusement effectué séparément, ce qui peut être nécessaire lorsque les conditions d'accès au site sont difficiles, c'est-à-dire présentent par exemple de faibles pro-, fondeurs d'eau. Dans ce cas là, on transportera par exemple sur une barge le caisson 1 seul, et on transportera sur une autre barge le bloc nucléaire 2 et l'élément de fermeture 3. On notera en passant qu'on peut prévoir sur cette deuxième barge des rails qui, par raccordement avec la voie ferrée 17, permettront le roulement des modules 2 et 3 directement sur ladite barge, ce après quoi lesdits éléments y seront solidement arrimés. Une fois parvenus sur le site, les modules 1, 2 et 3 seront assemblés sur place par emboîtement mutuel pour réaliser une chaufferie complète comme illustré par la figure 4.

On a donc réalisé, suivant l'invention, une chaufferie nucléaire à structure modulaire, constituée de plusieurs éléments "gigogne", de dimensions limitées en fonction des moyens de transport, fabriqués et testés en usine, pouvant être expédiés sous la forme d'un ensemble intégral ou encore séparément, ce qui, dans ce dernier cas, représente un avantage considérable compte tenu de ce que les modules peuvent avoir plusieurs dizaines de mètres de côté et représenter des poids que l'on peut chiffrer en milliers de tonnes, en ce qui concerne notamment le caisson 1.

Bien entendu, l'invention n'est nullement limitée au mode de réalisation décrit et illustré qui n'a été donné qu'à titre d'exemple. C'est ainsi que les principes de l'invention peuvent être appliqués à des réacteurs autres que des chaudières nucléaires sans sortir du cadre de l'invention.

L'invention comprend tous les équivalents techniques des moyens décrits ainsi que leurs combinaisons si celles-ci sont effectuées suivant son esprit et mises en oeuvre dans le cadre des revendications qui suivent.

**Revendications**

1. Chaufferie nucléaire fixe comprenant
— un réacteur nucléaire,
— au moins un générateur de vapeur connecté à ce réacteur,
— une enceinte de confinement (7) contenant ce réacteur et ce générateur et munie d'un support (8) de manière à constituer un bloc réacteur (2),
— et des appareillages et locaux auxiliaires (6), caractérisée par le fait que ledit bloc réacteur (2) est construit de manière à constituer un module transportable indépendamment,
— la chaufferie comportant en outre un structure constituant un caisson transportable (1) qui délimite un volume interne (12) et comporte une ouverture (1a) sur l'une des ses parois latérales pour permettre d'introduire ledit block réacteur (2) dans le volume interne,

— et un élément de fermeture transportable pour obturer ladite ouverture,
— une partie au moins desdits appareillages et locaux auxiliaires (6) étant intégrée dans les parois de ce caisson (1),
— les trois éléments constitués par ce block réacteur (2), ce caisson (1) et ce élément de fermeture (3) étant transportables aussi bien ensemble que séparément de manière à permettre d'installer d'abord le caisson (1) puis d'y introduire le block réacteur (2) par déplacement horizontal, puis d'obturer l'ouverture de ce caisson par déplacement horizontal de l'élément de fermeture (3).

2. Chaufferie selon la revendication 1, caractérisée par le fait que ledit élément de fermeture (3) contient une piscine pour le stockage des éléments combustibles usés.

3. Procédé de réalisation d'une chaufferie nucléaire selon la revendication 1 ou 2, caractérisée par le fait qu'il comporte les étapes suivantes:

— préfabrication et essai en usine d'un block réacteur transportable comportant une enceinte de confinement contenant un réacteur nucléaire et au moins un générateur de vapeur connecté à ce réacteur, ce block réacteur (2) étant monté sur un support (8) assurant sa stabilité aussi bien en service que pendant le transport,
— préfabrication et essai en usine d'une caisson transportable (1) dont les parois intégrent des appareillages et locaux auxiliaires (6) et délimitent un volume interne avec une ouverture (1a) sur l'une des parois latérales,
— préfabrication et essai en usine d'une élément de fermeture transportable pour obturer ladite ouverture du caisson,
— chargement par déplacement horizontal, de ce block réacteur (2), de ce caisson (1) et de cet élément de fermeture (3) sur au moins une barge de transport par eau,
— acheminement de cette barge par voie d'eau jusqu'à l'emplacement définitif de la chaufferie,
— déchargement et mise en place de ce caisson (1) par déplacement horizontal,
— déchargement et introduction du bloc réacteur (2) dans le caisson (1) par déplacement horizontal à travers ladite ouverture (1a),
— et déchargement et mise en place de l'élément de fermeture par déplacement horizontal jusqu'à obturer cette ouverture.

**Claims**

1. Immobile nuclear equipment comprising

— a nuclear reactor,
— at least one steam generator connected to this reactor,

— a casing (7) containing this reactor and this generator and being equipped with a stand (8) so as to form a reactor unit (29);

— and apparatus and auxiliary rooms (6), characterized in that said reactor unit (2) is conceived so as to constitute an independently transportable module,

— the equipment further comprising a structure constituting a transportable container (1) confining an inner volume (12) and containing an opening (1a) on one of its lateral walls in order to permit the introduction of said reactor unit (2) into the inner volume,

— and a transportable closing component for closing said opening,

— a part at least of said apparatus and auxiliary rooms (6) being integrated into the walls of this container (1),

— the three components constituted by said reactor unit (2), said container (1) and said closing component (3) being transportable as a whole as well as separately so as to allow firstly the installation of the container (19), then the introduction of the reactor unit (2) by shifting it horizontally, then the closing of the opening of this container by horizontal shifting of the closing component (3).

2. Nuclear equipment according to claim 1, characterized in that said closing component (3) comprises a water pool for the storage of used fuel elements.

3. Method for the production of a nuclear equipment according to claim 1 or 2, characterized in that it comprises the following steps:

— prefabrication and test at the works of a transportable reactor unit comprising a casing (7) containing a nulcear reactor and at least one steam generator connected to this nuclear reactor, this reactor unit (2) being assembled on a stand (8) assuring its stability during operation as well as during transportation,

— prefabrication and test at the works of a transportable container (1), the walls of this container integrating apparatus and auxiliary rooms (6) and confining an inner volume with an opening (1a) on one of the lateral walls,

— prefabrication and test at the works of a transportable closing component for closing said opening of the container,

— loading of this reactor unit (2), this container (1) and this closing component (3) by horizontal shifting on at least one barque for transport on water,

— transport of this barque on water to the definite site of the nuclear equipment,

— unloading and installation of said container by horizontal shifting,

— unloading and introduction of the reactor unit (2) into the container (1) by horizontal shifting through said opening (1a),

— and unloading and installation of the closing component by horizontal shifting until the opening is closed.

**Patentansprüche**

1. Feststehendes Kernkraftwerk mit

— einem Kernreaktor,

— mindestens einem mit diesem Reaktor verbundenen Dampferzeuger,

— einer Schutzhülle (7), die diesen Reaktor und diesen Dampferzeuger umgibt und mit einem Sockel (8) so versehen ist, daß das Ganze einen Reaktorblock (2) bildet,

— und Apparaturen und Zusatzräumen (6), dadurch gekennzeichnet, daß der Reaktorblock (2) so gebaut ist, daß er ein unabhängig transportierbares Modul bildet,

— wobei das Kernkraftwerk außerdem eine Struktur aufweist, die einen transportablen Behälter (1) bildet, der einen inneren Bereich (12) umschließt und eine Öffnung (1a) auf einer seiner Seitenwände zum Einbringen des Reaktorblocks (2) in den inneren Bereich aufweist,

— und ein transportables Verschlußelement zum Verschließen der genannten Öffnung,

— wobei zumindest ein Teil der gennanten Apparaturen und Zusatzräume (6) in die Wände dieses Behälters (1) eingearbeitet ist,

— und wobei die drei Elemente, die aus diesem Reaktorblock (29) diesem Behälter (1) und diesem Verschlußelement (3) gebildet werden, sowohl zusammen als auch getrennt transportiert werden können, so daß zuerst der Behälter (1) aufgestellt, dann der Reaktorblock durch waagerechtes Verschieben hineingebracht und dann die Öffnung des Behälters durch waagerechtes Verschieben des Verschlußelements (3) verschlossen werden kann.

2. Kernkraftwerk nach Anspruch 1, dadurch gekennzeichnet, daß das Verschlußelement (3) ein Wasserbecken zur Lagerung der verbrauchten Brennelemente aufweist.

3. Verfahren zur Herstellung eines Kernkraftwerks nach Anspruch 1 oder 2, dadurch gekennzeichnet, daß es die folgenden Verfahrensschritte aufweist:

— Vorfertigung und Testen im Werk eines Transportablen Reaktorblocks mit einer Schutzhülle (7), die einen Kernreaktor und mindestens einen mit diesem Kernreaktor verbundenen Dampferzeuger enthält, wobei dieser Reaktorblock (2) auf einem Sockel (8) angebracht ist, der seine Stabilität sowohl in Betrieb als auch während des Transports sichert,

— Vorfertigung und Testen im Werk eines transportablen Behälters (1), dessen Wände Apparaturen und Hilfsräume (6) aufnehmen und einen inneren Bereich mit einer Öffnung (1a) an einer der Seitenwände umschließen,

— Vorfertigung und Testen im Werk eines transportablen Verschlußelements zum Verschließen der Behälteröffnung,

— Ladung dieses Reaktorblocks (2), dieses Behälters (1) und dieses Verschlußelements (3) durch waagerechtes Verschieben auf mindestens einer Barke zum Transport auf dem Wasser,

— Beförderung dieser Barke auf dem Wasserweg bis zum endgültigen Bauplatz des Kernkraftwerks,

— Entladung und Aufstellung dieses Behältera (1) durch waagerechtes Verschieben,

— Entladung und Einbringen des Reaktorblocks (2) in den Behälter (1) durch waagerechtes Verschieben durch die Öffnung (1a),

— und Entladung und Aufstellen des Verschlußelements durch waagerechtes Verschieben bis zum Verschluß der Öffnung.

FIG.1

FIG.2

FIG.3

FIG.4

FIG.5